# DEMANDE DE BREVET EUROPEEN

(11) **EP 0 705 640 A2**
(43) Date de publication de la demande: **10.04.1996**
(21) Numéro de dépôt: 95115603.3
(22) Date de dépôt: 04.10.1995
(51) Int. Cl.: B01D 53/92, B01D 47/00

(54) **Dispositif pour l'épuration des gaz d'échappement émis par des véhicules automobiles**

(30) Priorité: 07.10.1994 IT VI940145
(71) Demandeur: Carestiato, Amelia Fabiola, I-36035 Marano Vicentino (Vicenza) (IT)
(72) Inventeur: Strobbe, Bruno Mariano, I-36015 Schio (Vicenza) (IT)
(74) Mandataire: Bettello, Luigi, Dott. Ing.

(57) **Abrégé**

Le dispositif comprend une cuve (5) renfermant un bain de solution aqueuse (6) à travers lequel on fait barboter les gaz à épurer qui sortent de deux faisceaux tubulaires (8) dont les tubes élémentaires sont pourvus en bout d'une sphère poreuse (9). Après barbotage dans la cuve (5), les gaz passent au travers d'un filtre constitué par un tapis sans fin (14) en feutre, tendu entre deux séries de tambours superposés dont l'un est prévu moteur.

## Description

La présente invention a pour objet un dispositif plus particulièrement destiné à assurer l'épuration des gaz d'échappement émis par des véhicules automobiles, notamment dans des ambiances fermées telles que des garages, des laboratoires d'essais ou locaux similaires.

Le dispositif oui fait l'objet de l'invention est défini à la revendication 1 et aux revendications qui dépendent de celle-ci.

Il comprend en fait une cuve remplie d'une solution acqueuse dans laquelle les gaz d'échappement sont en premier lieu amenés à barboter afin d'être débarrasés de la plus grande partie des substances nocives qu'ils renferment. Cette cuve est surmontée par un filtre à couches superposées qui assure une seconde épuration des gaz avant que ceux-ci soient refoulés dans l'ambiance extérieure par un moto-ventilateur électrique.

Le filtre est en pratique constitué par un tapis sans fin en feutre imprégné d'huile. Ce tapis est entraîné et supporté par deux séries de tambours disposés en superposition, et il est traversé par les gaz qui sortent du bain de solution aqueuse après barbotage, en opérant de la sorte un captage pratiquement total des substances nocives contenues dans les gaz traités.

L'introduction des gaz d'échappement dans le dispositif est effectué à travers deux faisceaux tubulaires latéraux, opposés l'un à l'autre. Les tubes de ces faisceaux sont pourvus à leur extrémité libre d'une sphère poreuse plongée à une profondeur appropriée dans le bain, Ces sphères assurent la formation et l'éclatement d'une multitude de bulles de gaz, en améliorant ainsi l'effet de barbotage au sein de la solution aqueuse.

Avant d'être refoulés dans l'ambiance, les gaz qui sortent du module de filtration traversent des filtres de carbone actif disposés dans la partie supérieure du dispositif.

Sur le dessin annexé :
La fig. 1 est une vue en élévation par l'avant montrant les éléments principaux d'un dispositif d'épuration établi conformément à la présente invention.
La fig. 2 est une vue de côté de ce dispositif.

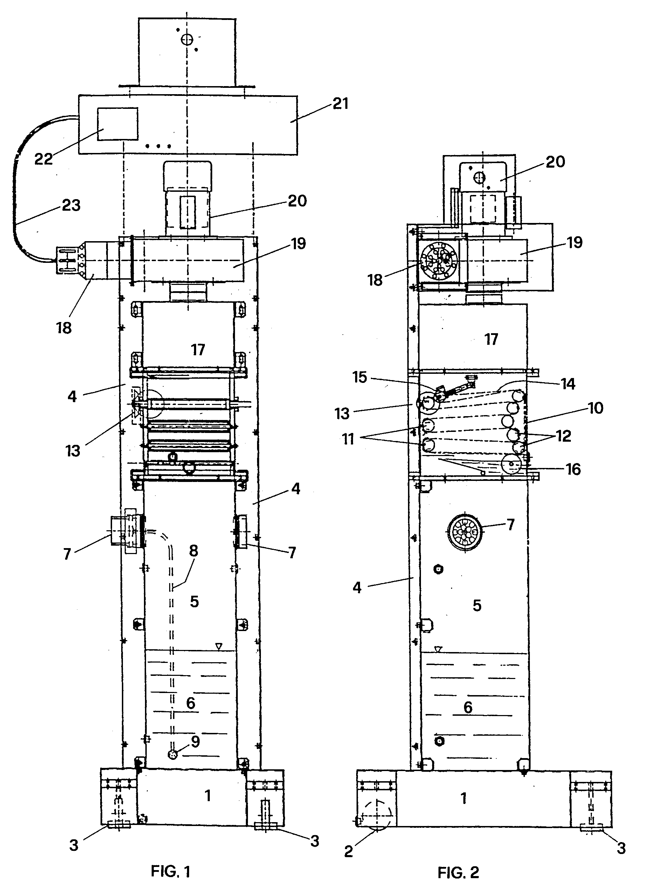

Le dispositif représenté en fig. 1 et 2 se présente extérieurement sous la forme et les dimensions d'une colonne ou poste pour la distribution des carburants.

La partie inférieure de la carcasse qui renferme les éléments modulaires destinés à l'épuration des gaz d'échappement comprend une embase 1 équipée de roulettes 2 vers l'avant et de pieds fixes 3 vers l'arrière, afin de permettre le déplacement aisé et l'appui de l'ensemble à l'endroit désiré.

Au-dessus de cette embase 1 est prévu un carter parallélipipédique 4 à l'intérieur duquel sont logés les trois éléments modulaires essentiels pour l'épuration des gaz. Ces éléments sont aptes à être extraits à tout moment en vue de la manipulation et du remplacement des parties actives du dispositif oui assurent le captage des gaz à traiter.

Le premier élément modulaire, référencé 5 et disposé au-dessus de l'embase 1, consiste en une cuve destinée à renfermer une solution aqueuse 6 (il s'agit en fait d'une solution de type alcalin). Cette cuve est pourvue de deux bouches d'admission 7 prévues de manière symmétrique sur deux côtés opposés de ladite cuve et propres à être reliées à l'échappement d'un véhicule automobile.

A chaque bouche 7 font face les extrémités ouvertes des petits tubes 8 (dont un seul apparaît en fig. 1) d'un faisceau tubulaire destiné à transférer verticalement les gaz d'échappement au sein du bain de solution aqueuse, chacun de ces petits tubes 8 étant muni en bout d'un sphère poreuse 9 à travers laquelle lesdits gaz à épurer sortent à l'état finement divisé.

En s'élevant à travers la solution, les minuscules bulles de gaz se refroidissent et se débarrassent de la quasi totalité des composés indésirables tels que le plomb, l'anhydride sulfureux et les autres substances lourdes, qui descendent lentement vers le fond de la cuve et se déposent sous forme de boues.

La conception modulaire du dispositif permet l'extraction périodique de la cuve en vue du nettoyage de son fond et du remplacement de la solution dont le niveau peut être complété si besoin est entre deux manipulations.

Le second élément modulaire, référencé 10, est constitué par une cuve latéralement étanche, qui, à travers un fond finement perforé, communique avec le module inférieur 5 renfermant la solution aqueuse à partir de laquelle sortent les gaz. Ce module ou cuve 10 est équipé d'une série de tambours arrière 11 et d'une série similaire de tambours antérieurs 12. Le tambour arrière 11 placé au sommet est moteur en étant disposé coaxialement à un engrenage 13 qui, par une paire de pignons coniques entraînée par un moto-réducteur électrique (non représenté), assure l'entraînement d'un tapis mobile 14. le tambour moteur transmet lui-même le mouvement aux autres tambours menés par ce tapis 14 qui fait ainsi fonction de courroie de transmission.

Pour assurer la nécessaire adhérence du tapie sur les tambours, il est prévu un galet opscillant 15 (voir fig. 2) qui joue le rôle de tendeur en exerçant une pression adéquate dudit tapis sur le tambour moteur. De plus, l'ensemble des tambours est revêtu d'une couche rugueuse de caoutchouc propre à améliorer l'adhérence. Ces mesures sont rendues d'autant plus nécessaires que le tapis est en permanence imbibé d'huile par suite de son contact avec un tambour 16 (fig. 2) partiellement immergé dans la cuvette inférieure qui recueille l'huile.

Dans ces conditions, les gaz aspirés par le haut traversent plusieurs fois le filtre constitué par le tapis mobile imbibé d'huile et en déplacement continuel, et perdent par gravité une grande partie des composants nocifs encore présente. Ces gaz passent ainsi à l'état épuré dans le troisième élément modulaire 17, placé immédiatement au-dessus.

Ce troisième élément 17 comprend essentiellement une cartouche amovible renfermant des carbones actifs qui opèrent la purification définitive des gaz en coopération avec un filtre final logé à l'intérieur de la buse de sortie 18 à travers laquelle l'air est refoulé dans l'ambiance.

Entre cette buse 18 et le troisième élément modulaire 17 est monté un aspirateur 19 actionné par un moteur électrique 20 placé au-dessus de celui-ci.

La partie supérieure d'aspiration du dispositif d'épuration est recouverte par un couvercle 21 oui a été représenté à la position soulevée en fig. 1 (non représenté en fig. 2). Ce couvercle renferme également une petite centrale électronique 22 pour la commande, le contrôle et la signalisation du fonctionnement de l'ensemble. En fait, le contrôle du fonctionnement correct est effectué par prélèvement, dans la buse de sortie 18 à travers une petit tube 23, d'une faible quantité d'air en vue de relever la présence éventuelle de monoxyde de carbone.

Cette détection est opérée au moyen d'une sonde appropriée qui fournit un signal d'alarme et stoppe le dispositif dans le cas où le fonctionnement défectueux persiste après une temporisation appropriée.

De cette manière, l'utilisateur est toujours assuré que les gaz traités sont refoulés dans l'ambiance sous la forme d'un air totalement épuré.

Le recours à l'emploi d'un élément modulaire central renfermant les tambours caoutchoutés pour l'entraînement du tapis en feutre imbibé d'huile permet l'utilisation du dispositif pendant un nombre considérable d'heures de travail, en plus d'une amélioration de l'action épuratrice sur les gaz, avec tous les avantages y afférents.

On notera également que les deux faisceaux tubulaires qui opèrent l'introduction des gaz dans la solution aqueuse en engendrant une formation plus fine de bulles gazeuses et un refroidissement plus efficace de ces dernières, tout comme la prévision de la centrale électronique de commande et de signalisation (22), améliorent la sécurité présentée par le dispositif suivant l'invention qui répond aux normes européennes antidéflagration.

## Revendications

1. Dispositif pour l'épuration des gaz d'échappement émis par des véhicules automobiles, notamment dans des ambiances fermées telles que les garages et locaux similaires, caractérisé en ce qu'il comprend en combinaison une cuve (5) remplie d'une solution aqueuse au sein de laquelle les gaz à épurer viennent barboter, et des tambours caoutchoutés (11, 12) qui assurent l'entraînement et le renvoi d'un tapis sans fin (14) en feutre imbibé d'huile, lequel tapis est traversé par les gaz qui s'élèvent en barbotant dans la cuve précitée, en assurant de la sorte un captage massif des particules nocives renfermées dans les gaz à traiter, ces particules nocives étant retenues par le tapis précité formant ainsi filtre.

2. Dispositif suivant la revendication 1, caractérisé en ce que le déplacement continu du tapis sans fin (14) est obtenu grâce à un engrenage (13) convenablement entraîné en rotation, dont le mouvement est transmis à deux séries (11 et 12) de tambours menés sur lesquels s'enroule ledit tapis (14) qui fait ainsi fonction de courroie de transmission en étant en permanence imbibé d'huile par suite de son contact avec un tambour (16) partiellement immergé dans une cuvette inférieure de collecte.

3. Dispositif suivant l'une quelconque des revendications 1 et 2, caractérisé en ce qu'il comprend deux faisceaux de tubes (8) opposés l'un à l'autre, à travers lesquels sont introduits les gaz d'échappement à épurer et qui, pour amener ces gaz au sein de la solution aqueuse (6), sont munis à leur extrémité libre de sortie d'une sphère poreuse (9) afin d'opérer le fractionnement des bulles gazeuses introduites dans la solution précités et assurer le refroidissement des gaz et une première élimination des composés nocifs de ceux-ci.

4. Dispositif suivant l'une quelconque des revendications 1, 2 et 3, caractérisé en ce qu'il comprend une centrale électronique (22) qui assure la commande et la signalisation du fonctionnement correct de l'ensemble moyennant prélèvement d'une fraction de l'air purrifié à travers un petit tube (23) et une sonde sensible au monoxyde de carbone.
